(19) Europäisches Patentamt

European Patent Office

Office européen des brevets

(11) Veröffentlichungsnummer: **0 462 418 A1**

## (12) EUROPÄISCHE PATENTANMELDUNG

(21) Anmeldenummer: **91108411.9**

(22) Anmeldetag: **24.05.91**

(51) Int. Cl.5: **F15B 15/28, G01B 7/02**

(30) Priorität: **15.06.90 DE 4019057**

(43) Veröffentlichungstag der Anmeldung:
**27.12.91 Patentblatt 91/52**

(84) Benannte Vertragsstaaten:
**DE FR GB IT**

(71) Anmelder: **ROBERT BOSCH GmbH**
**Postfach 10 60 50**
**W-7000 Stuttgart 10(DE)**

(72) Erfinder: **Meier, Dietmar**
**Meisenweg 5**
**W-7531 Mühlhausen(DE)**

(54) **Arbeitszylinder mit Wegaufnehmer.**

(57) Die Erfindung betrifft einen Arbeitszylinder mit Wegaufnehmer, bei dem der Wegaufnehmerkern parallel zur Kolbenstange geführt ist. Über einen höhenverstellbaren Gelenkkopf (16) wird der Wegaufnehmerkern (36) ausgerichtet. Der Gelenkkopf (16) ist in einem Bolzen (12) verschraubt, der in einer radialen Bohrung (11) in der Kolbenstange (10) verankert ist. Der Wegaufnehmerkern (36) wird mit einer Schraube (41) mit tonnenförmigem Schraubenkopf reibungsarm im Wegaufnehmergehäuse (38) geführt.

EP 0 462 418 A1

## Stand der Technik

Die Erfindung geht aus von einem Arbeitszylinder mit Wegaufnehmer nach der Gattung des Hauptanspruchs. Bei derartigen bekannten Arbeitszylindern mit Wegaufnehmern bereitet die achsparallele Ausrichtung des Wegaufnehmers selbst bei kleinen Fertigungs- und Einbautoleranzen erhebliche Probleme. Winkelabweichungen zwischen Kolbenstangenachse und Wegaufnehmerkernachse verursachen erhöhte Reibung des Wegaufnehmerkerns im Spulengehäuse und führen auch zu erhöhter Hysterese im Ausgangssignal.

## Vorteile der Erfindung

Der erfindungsgemäße Arbeitszylinder mit den kennzeichnenden Merkmalen des Hauptanspruchs hat demgegenüber den Vorteil, daß Winkelfehler zwischen Wegaufnehmerkern und Kolbenstange auf einfache Weise nahezu ausgeschaltet werden. Eine nachträgliche Justage und damit Einhalten der achsparallelen Lage des Wegaufnehmerkerns ist möglich.

## Zeichnung

Ein Ausführungsbeispiel der Erfindung ist in der nachfolgenden Beschreibung und Zeichnung wiedergegeben. Letztere zeigt einen Arbeitszylinder mit Wegaufnehmer, teilweise im Schnitt.

## Beschreibung des Ausführungsbeispiels

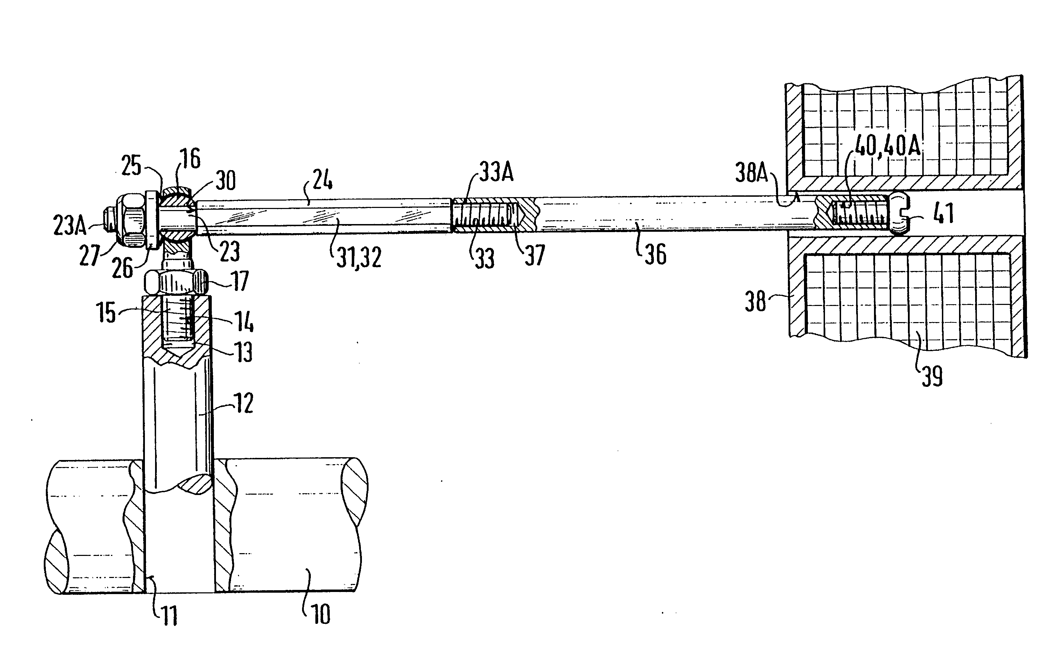

In der Zeichnung ist mit 10 die Kolbenstange eines nicht dargestellten Arbeitszylinders bezeichnet. In dem aus dem Arbeitszylinder herausragenden Teil der Kolbenstange ist eine radial verlaufende Bohrung 11 angebracht, in der ein zylindrischer Bolzen 12 fest eingebracht ist. Das entgegengesetzte Ende des Bolzens 12 weist eine axiale Sackbohrung 13 auf, die mit einem Innengewinde 14 versehen ist. In diese Bohrung 13 ist ein Anschlußbolzen 15 eines Gelenkkopfes 16 eingeschraubt, der mit einer aufgeschraubten Mutter 17 gegen den Bolzen 12 gekontert ist.

In der Bohrung des Gelenkkopfes 16 ist mit ihrem zylindrischen Absatz 23 eine Verbindungsstange 24 gelagert. Das über den Gelenkkopf 16 hinausragende Ende des Absatzes 23 ist mit einem Außengewinde 23A versehen. Über diesen Gewindeteil 23A sind eine Federscheibe 25 und eine Scheibe 26 geschoben. Mit einer Sechskantmutter 27, die anschließend aufgeschraubt ist, wird der Gelenkkopf 16 spielfrei gegen eine Schulter 30 der Verbindungsstange 24 verspannt.

Die Verbindungsstange 24 ist zylindrisch ausgebildet, wobei ihr Durchmesser größer als der Innendurchmesser des Gelenkkopfes 16 ist, und weist zwei parallel zur Längsachse verlaufende Abflachungen 31, 32 auf. Das dem Gelenkkopf 16 gegenüberliegende Ende der Verbindungsstange ist als zylindrischer Absatz 33 geringeren Durchmessers ausgebildet, der ein Außengewinde 33A aufweist. An die Verbindungsstange 24 ist mit Hilfe der Schraubverbindung ein stangenförmiger Wegaufnehmerkern 36 angeschraubt, der dazu an seinem einen Ende eine axiale Sackbohrung 37 mit Innengewinde aufweist. Der Wegaufnehmerkern 36 ragt teilweise in eine Bohrung 38A eines Wegaufnehmergehäuses 38. Der Durchmesser der Bohrung 38A ist größer als der Außendurchmesser des Kerns 36. Der Kern 36 weist an seinem im Gehäuse 38 befindlichen Ende eine axiale Sackbohrung 40 mit Innengewinde 40A auf. In diese ist eine Kunststoffschraube 41 eingeschraubt, die beispielsweise aus Teflon besteht. Diese Schraube kann als Schlitz-, Kreuzschlitz- oder Innensechskantschraube ausgebildet sein. Der Schraubenkopf ist tonnenförmig ausgebildet, wobei sein Außendurchmesser etwa dem Innendurchmesser der Bohrung 38A des Wegaufnehmergehäuses 38 entspricht, aber größer ist als der Durchmesser des Wegaufnehmerkerns 36. Durch diese tonnenförmige Kunststoffschraube 41 wird der Wegaufnehmerkern 36 reibungsarm im Gehäuse 38 geführt.

Der Gelenkkopf 16 kann durch Drehen in der Bohrung 14 des Bolzens 12 jeweils in der halben Höhe der Gewindesteigung in seinem Abstand zur Kolbenstange 10 verändert werden. Der Wegaufnehmerkern 36 kann damit an seiner dem Gelenkkopf 16 zugewandten Seite angehoben oder abgesenkt werden, um eine achsparallele Ausrichtung zur Kolbenstange zu erreichen.

## Patentansprüche

1. Arbeitszylinder mit Wegaufnehmer, dadurch gekennzeichnet, daß am außenliegenden Teil der Kolbenstange (10) des Arbeitszylinders ein querverlaufender Bolzen (12) angeordnet ist, an dessen Stirnseite ein Gelenkkopf (16) angebracht ist, in dem eine parallel zur Kolbenstange (10) verlaufende Stange (24, 36) gelagert ist, die mindestens auf einem Teil ihrer Länge aus weichmagnetischem Werkstoff besteht und Teil eines Wegaufnehmers ist, der eine gehäusefeste Spule (39) aufweist.

2. Arbeitszylinder mit Wegaufnehmer nach Anspruch 1, dadurch gekennzeichnet, daß die Stange zweiteilig ausgebildet ist und aus einem Wegaufnehmerkern (36) und einem sich an diesen anschließenden zweiten Stangenteil (24) besteht.

3. Arbeitszylinder mit Wegaufnehmer nach Anspruch 1 und/oder 2, dadurch gekennzeichnet, daß der Gelenkkopf (16) gegenüber dem Bolzen (12) höhenverstellbar ist.

4. Arbeitszylinder mit Wegaufnehmer nach Anspruch 1 bis 3, dadurch gekennzeichnet, daß die Verbindungsstange (24) mit Hilfe einer Federscheibe (25) und einer Mutter (27) spielfrei im Gelenkkopf (16) verspannt ist.

5. Arbeitszylinder mit Wegaufnehmer nach Anspruch 1 bis 4, dadurch gekennzeichnet, daß der Wegaufnehmerkern (36) durch eine Schraube (41), deren Kopf tonnenförmig ausgebildet ist, reibungsarm im Wegaufnehmergehäuse (38) geführt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-1 002 844   (GULLICK LTD)<br>* Seite 1, Zeile 8 - Seite 2, Zeile 100; Abbildungen 1,2 *<br>– – – | 1-5 | F 15 B 15/28<br>G 01 B 7/02 |
| A | DE-A-3 727 111   (GERWERKSCAFT EISENHÜTTE WEST-FALIA GMBH)<br>* das ganze Dokument *<br>– – – | 1-5 | |
| A | EP-A-0 115 008   (KABUSHIKI KAISHA SG)<br>* Seite 12, Zeile 8 - Seite 14, Zeile 8; Abbildung 4 *<br>– – – | 1 | |
| A | GB-A-2 021 695   (SPAREX LTD)<br>* das ganze Dokument *<br>– – – | 1,4 | |
| A | DE-A-3 424 461   (KABUSHIKI KAISHA)<br>* das ganze Dokument *<br>– – – | 1 | |
| P,A | DE-A-3 901 450   (ZETT-MESS-TECHNIK GMBH)<br>* das ganze Dokument *<br>– – – – – | 1,4 | |

| | RECHERCHIERTE SACHGEBIETE (Int. Cl.5) |
|---|---|
| | F 15 B<br>G 01 B<br>G 01 D |

Der vorliegende Recherchenbericht wurde für alle Patentansprüche erstellt

| Recherchenort | Abschlußdatum der Recherche | Prüfer |
|---|---|---|
| Den Haag | 04 Oktober 91 | BROCK T.J. |